## Europäisches Patentamt

## European Patent Office

## Office européen des brevets

(11) Veröffentlichungsnummer: **0 111 859**
A2

(12) # EUROPÄISCHE PATENTANMELDUNG

(21) Anmeldenummer: **83112455.7**

(22) Anmeldetag: **10.12.83**

(51) Int. Cl.³: **B 32 B 35/00**
**B 30 B 5/06, B 29 D 27/00**

(30) Priorität: **17.12.82 DE 3246787**

(43) Veröffentlichungstag der Anmeldung:
**27.06.84 Patentblatt 84/26**

(84) Benannte Vertragsstaaten:
**BE DE FR GB IT NL SE**

(71) Anmelder: **Elastogran Maschinenbau GmbH**

**D-8021 Strasslach(DE)**

(72) Erfinder: **Mackert, Werner**
**Sohnckestrasse 9**
**D-8000 München 71(DE)**

(74) Vertreter: **Springer, Hans Jörg, Dr. et al,**
**Carl-Bosch-Strasse 38**
**D-6700 Ludwigshafen(DE)**

(54) Antrieb eines Doppelplattenbandes zur Herstellung kaschierter Hartschaumplatten.

(57) Antrieb eines Doppelplattenbandes zur kontinuierlichen Herstellung von kaschierten Hartschaumplatten, dessen aus einzelnen Platten gebildete Bänder (4) in Form von Endlosbändern über Umlenkräder (5) geführt sind, die entsprechend der Breite der Platten einen polygonalen Umfang aufweisen. Die durch die Polygonform hervorgerufenen Schwankungen der Transportgeschwindigkeit der Plattenbänder werden durch eine diesen entgegenwirkende Regelung (9-14) des motorischen Antriebs (8) der Umlenkräder ausgeglichen.

FIG.1

Antrieb eines Doppelplattenbandes zur Herstellung kaschierter Hartschaumplatten

Die Erfindung bezieht sich auf den Antrieb eines Doppelplattenbandes zur kontinuierlichen Herstellung von kaschierten Hartschaumplatten gemäß Oberbegriff des Patentanspruchs 1.

Bei einem solchen Doppelplattenband wird die Antriebs- und
Stützfunktion für die auszuschäumenden Deckschichten durch
ein oberes und unteres Band aus kettenartig miteinander
verbundenen Platten übernommen. Die Kettenteilung entspricht der Breite der einzelnen Platten, so daß sich eine
große polygonale Teilung des Umfangs der Umlenkräder
ergibt. Bekannterweise wirkt sich diese beim Bandtransport
als Polygoneffekt aus, d.h. es entstehen wechselweise
zunehmende und abnehmende Geschwindigkeitsänderungen,
obwohl die Umlenkräder gleichförmig angetrieben werden.
Diese periodischen Geschwindigkeitsänderungen führen zu
nachteiligen Schwingungen, die sich in einer kontinuierlichen Produktionslinie auch auf die vor- und nachgeschalteten Maschinengruppen störend auswirken, insbesondere auf die Querteilanlage, deren Genauigkeit beim
Trennschnitt dadurch vermindert wird.

Gemäß der DE-OS 30 31 130 wurde daher vorgeschlagen,
diesen Polygoneffekt dadurch herabzusetzen, daß mit dem
anzutreibenden Umlenkrad ein dieselbe Eckenzahl aufweisendes Polygon-Kettenrad drehfest verbunden ist, das
über eine feinzahnige Kette von einem Antriebs-Kettenrad
angetrieben wird, wobei die Kettenteilung ein ganzzahliger
Bruchteil einer Polygon-Kettenradseite ist, und Polygon-Kettenrad und Antriebskettenrad so angeordnet sind, Sp/P daß für einen Drehwinkel der Ecken des Umlenkrades und des Polygon-Kettenrades gleich null die Umfangsgeschwindigkeit der Polygon-Kettenrad-Ecken gleich der Antriebsgeschwindigkeit ist, und daß die Umfangsgeschwindigkeit der Umlenkrad-Ecken gleich der Plattenband-Geschwindigkeit ist.

Entsprechend der Zähnezahl (=Eckenzahl) des Antriebskettenrades tritt bei diesem ebenfalls ein Polygoneffekt auf, so daß der tatsächliche Geschwindigkeitsverlauf des Plattenbandes dem in dieser Schrift theoretisch dargestellten Geschwindigkeitsverlauf nur mehr oder weniger näherungsweise folgt. Eine Verbesserung des Plattenbandtransportes ist somit trotz des hohen mechanischen Aufwandes in dem erforderlichen Maße nicht erreicht.

Demgemäß liegt vorliegender Erfindung die Aufgabe zugrunde, Einrichtungen für den Antrieb eines Doppelplattenbandes zu schaffen, durch die der als Polygoneffekt bezeichnete Ungleichförmigkeitsgrad des Plattenbandtransports mindestens so weit herabgesetzt werden kann, daß nachteilige Auswirkungen auf die vor- und nachgeschalteten Maschinengruppen sowie auf das Plattenprodukt selbst ausgeschlossen sind.

Die Lösung der Aufgabe ist im Kennzeichnungsteil der Patentansprüche beschrieben.

Nachfolgend ist die Erfindung anhand eines in der Zeichnung schematisch dargestellten Ausführungsbeispiels näher erläutert.

Es zeigen

Figur 1    ein Blockschaltbild der Regelungseinrichtung
nach der Erfindung für den Antrieb eines Doppelplattenbandes

Figur 2    die Geschwindigkeitsverhältnisse an einem Umlenkrad.

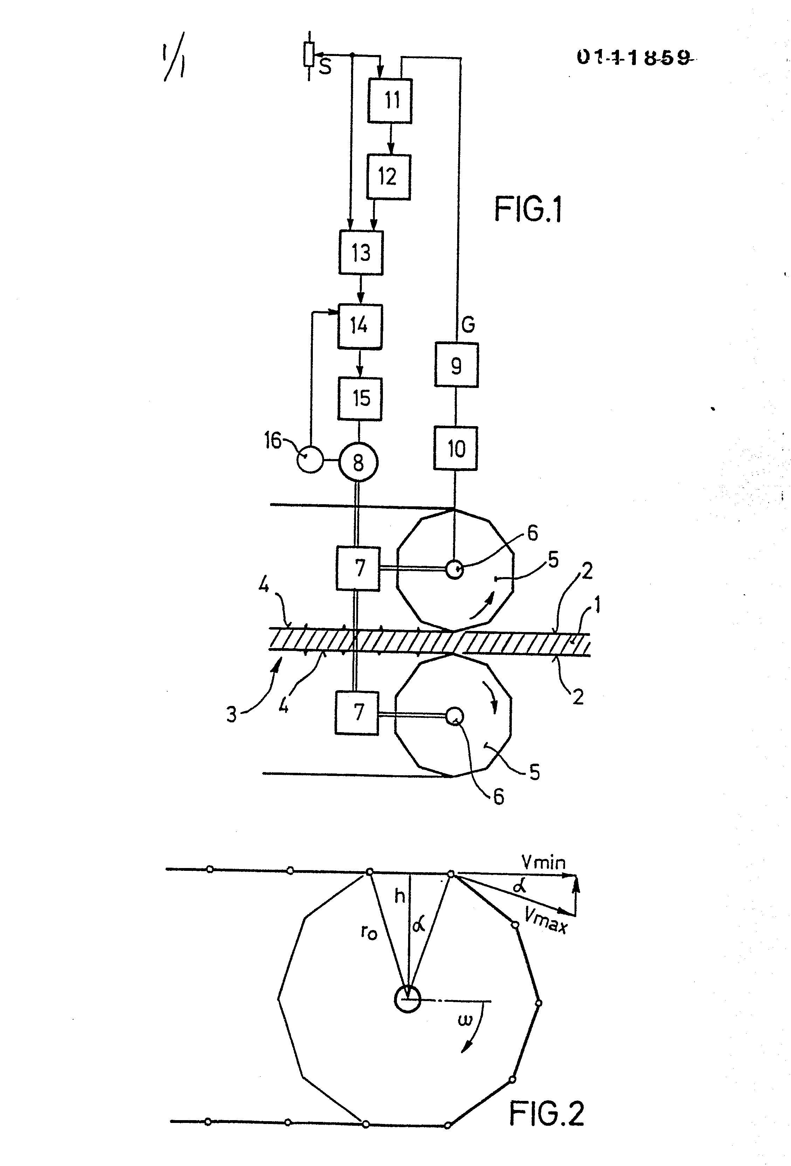

Für die kontinuierliche Herstellung von Hartschaumplatten
in Form von ausgeschäumten Verbundelementen 1 (Figur 1)
mit metallischen oder anderen geeigneten Deckschichten 2
wird, wie eingangs beschrieben, ein Doppelplattenband 3
aus zwei zueinander parallel laufenden, einen Hohlraum
zwischen sich einschließenden Plattenbändern 4 verwendet,
deren einzelne Platten kettenartig miteinander verbunden
und die in Form eines Endlosbandes über Umlenkräder 5
geführt sind.

Die Wellen 6 der Umlenkräder 5 stehen über Getriebe 7 mit
einem elektromotorischen Antrieb 8 in Verbindung. Bei
einem gleichförmigen Antrieb der Umlenkräder werden die
Plattenbänder 4 bei der Umlenkung periodisch beschleunigt
und verzögert, so daß sich für diese sowie für das Plattenprodukt ein schwankender Geschwindigkeitsverlauf V ergibt.
Die Geschwindigkeitsänderung zwischen $V_{max.}$ und $V_{min.}$ ist
dabei von der Zahl der Polygonecken des Umlenkrades abhängig und beträgt bei einem Umlenkrad mit z.B. 10 Ecken
beispielsweise 5 % der Geschwindigkeit $V_{max.}$ (Figur 2).

Wird die Umfangsgeschwindigkeit an den Ecken des Umlenkrades als konstant angenommen, so kann man diese Geschwindigkeit als $V_{max.} = r_0 \cdot \omega$ anschreiben, wobei $\omega$ die
Winkelgeschwindigkeit und $r_0$ der Eckenradius sind. Die
minimale Geschwindigkeit ergibt sich zu

$V_{min.} = h \cdot \omega = V_{max.} \cdot \cos\alpha$, wobei h der auf eine Polygonseite senkrechte Radius und $\alpha$ der halbe Drehwinkel von Ecke zu Ecke sind, so daß $2\alpha = 360/Z$ (Z = Zahl der Ecken) ist.

Entsprechend der Erfindung wird zu Kompensation der Schwankungen der Geschwindigkeit die Drehzahl des motorischen Antriebes beeinflußt. Dazu wird der charakteristische Verlauf der Geschwindigkeitsänderung erfaßt und auf einen Geschwindigkeitsgeber übertragen. Das dabei gewonnene Signal wird dazu benutzt, den Geschwindigkeits- -Sollwert für den geregelten Antriebsmotor derart zu korrigieren, daß die Drehzahl des Antriebs den Geschwindigkeitsänderungen entgegenwirkt.

Da der charakteristische Geschwindigkeitsverlauf in der Praxis sehr stark von konstruktiven Einzelheiten und der Kinematik des Doppelplattenbandes bestimmt ist und somit wesentlich von der in Figur 2 theoretisch abgeleiteten Kosinusfunktion abweicht, ist es zweckmäßig, den für die Praxis geltenden Verlauf an einem fertiggestellten Doppelplattenband meßtechnisch aufzuzeichnen und anschließend auf den Geschwindigkeitsgeber zu übertragen. Um den auszuwertenden Geschwindigkeitsverlauf nicht zu kompliziert zu gestalten, kann aus dem gemessenen Verlauf, der zweckmäßigerweise den Ablauf der Kettenglieder über mehrere Umdrehungen eines Umlenkrades aufzeigt, ein charakteristischer Polygonzug ermittelt werden, der auf den Geschwindigkeitsgeber übertragen wird. Hierzu treibt die Welle 6 eines Umlenkrades 5 über ein Getriebe 10 eine dem polygonalen Umfang des Umlenkrades entsprechende Kurve (in der Zeichnung nicht dargestellt) an, auf der als Geschwindigkeitsgeber der Abgriff eines Potentiometers in an sich bekannter Weise mittels eines Hebelarmes läuft. Das Getriebe 10, dessen Übersetzungsverhältnis der Eckenzahl des Umlenkrades entspricht, vervielfacht die Umläufe des Ge-

0111859

schwindigkeitsgebers derart, daß sie wieder mit der Zähnezahl des Umlenkrades übereinstimmt.

Bei dem so gewonnenen Ausgangssignal G des Geschwindigkeitsgebers 9 handelt es sich um ein Signal mit konstanter
Amplitude, das nur die Charakteristik der Geschwindigkeitsänderung wiedergibt und damit dem Geschwindigkeitssollwerts so nicht aufgeschaltet werden kann. Da die zu
kompensierende Geschwindigkeitsänderung ein fester Prozentsatz, z.B. 5 % bei einem Umlenkrad mit 10 Ecken ist, muß
vor dem Aufschalten auf den Geschwindigkeitssollwert die
Amplitude des Gebersignals nun so angepaßt werden, daß sie
bei jedem einstellbaren Geschwindigkeitssollwert jeweils
z.B. 5 % vom eingestellten Sollwert beträgt. Zu diesem
Zweck werden sowohl das Gebersignal als auch der jeweils
eingestellte Geschwindigkeitssollwert auf einen elektronischen Multiplizierer 11 geführt, der die Amplitude des
Ausgangssignals so verändert, daß diese immer ein
prozentualer Anteil des eingestellten Sollwertes ist.

Um den Geschwindigkeits-Sollwert zu dem Zeitpunkt herabzusetzen und damit die Antriebsdrehzahl des Motors zu
vermindern, bei dem das Doppelplattenband seine Geschwindigkeit erhöht und umgekehrt, wird das Signal in
einer anschließenden Schaltung 12 invertiert. Das Ausgangssignal der Schaltung 12 wird dann zusammen mit dem ursprünglichen Geschwindigkeits-Sollwert mittels eines
Addierers 13 zusammengeführt, so daß ein resultierender
Sollwert entsteht, dessen Schwankungen nach Betrag und
Phasenlage dem invertierten Geschwindigkeitsverlauf des
Doppelplattenbandes entspricht und der auf den Sollwert-Eingang eines Reglers 14 für eine Speiseeinrichtung 15 des Antriebsmotors 8 geschaltet ist. Mit dem
Istwert eines Drehzahlgebers 16 des Motors 8 resultiert
daraus eine Regelung auf gleichförmige Geschwindigkeit des

0111859

Plattenbandes. Dabei ist es aufgrund der großen Reibung, die im Betrieb eines solchen Doppelplattenbandes auftritt, nicht erforderlich, daß der Antriebsmotor abbremsen kann.

Wegen der im Regelkreis des Antriebs wirksamen Zeitkonstanten ist es erforderlich, dem Geschwindigkeitsgeber 9 einen gewissen Vorlauf zu geben, so daß die Kompensationswirkung zum richtigen Zeitpunkt einsetzt. Dies wird dadurch erreicht, daß die Kurve für den abtastenden Potentiometerabgriff gegenüber dem Umfang des Umlenkrades 5 vorlaufend versetzt angeordnet ist.

Der Aufwand für die erfindungsgemäße Einrichtung ist als gering anzusehen, da aus Gleichlaufgründen mit den vor- und nachgeschalteten Maschinengruppen ein solches Doppelplattenband gewöhnlich bereits mit einem regelbaren Antrieb ausgestattet ist.

**Patentansprüche**

1. Antrieb eines Doppelplattenbandes zur kontinuierlichen Herstellung von kaschierten Hartschaumplatten, dessen einen Hohlraum zwischen sich einschließenden Bänder (4) durch kettenartig miteinander verbundene Platten gebildet und in Form eines Endlosbandes über Umlenkräder (5) geführt sind, die mit einem elektromotorischen Antrieb (8) in Verbindung stehen und einen entsprechend der Breite der Platten polygonalen Umfang aufweisen, <u>dadurch gekennzeichnet</u>, daß zum Ausgleich der durch die Polygonform der Umlenkräder (5) verursachten periodischen Schwankungen der Geschwindigkeit der Bänder (4) für den Antrieb (8) eine diesen Schwankungen entgegenwirkende Regelung vorgesehen ist, bestehend aus einem den Geschwindigkeitsverlauf wenigstens eines Plattenbandes abtastenden Geschwindigkeitsgeber (9), dessen invertiertes Signal dem eingestellten Sollwert (S) der Plattenbandgeschwindigkeit in einem Sollwertgeber (11, 12, 13) überlagert wird, und einem Regler (14) für die Speiseeinrichtung (15) des Antriebsmotors (8), der mit dem Ausgang des Sollwertgebers verbunden ist und dessen Istwert-Eingang an einen Drehzahlgeber (16) des Antriebsmotors angeschlossen ist.

2. Antrieb nach Anspruch 1, <u>dadurch gekennzeichnet</u>, daß der den Geschwindigkeitsverlauf eines Plattenbandes (4) abtastende Geschwindkeitsgeber (9) ein Potentiometer ist, dessen Abgriff auf einer dem polygonalen Umfang des Umlenkrades (5) entsprechenden Kurve läuft, die wiederum über ein Getriebe (10) von der Welle (6) eines Umlenkrades antreibbar ist.

0111859

3. Antrieb nach Anspruch 1 und 2, <u>dadurch gekennzeichnet</u>, daß die Kurve zum Abtasten durch das Potentiometer zur Kompensation der Regelzeitkonstanten gegenüber dem Umfang des Umlenkrades (5) im Sinne eines Vorlaufs versetzt angeordnet ist.

Zeichn.

0111859

FIG.1

FIG.2